# NEUE EUROPÄISCHE PATENTSCHRIFT

(11) **EP 1 069 016 B2**
(45) Veröffentlichungstag und Bekanntmachung des Hinweises auf die Entscheidung über den Einspruch: **05.12.2007**
(45) Hinweis auf die Patenterteilung: 28.04.2004
(21) Anmeldenummer: 00111100.4
(22) Anmeldetag: 06.06.2000
(51) Int. Cl.: B60T 13/68, B60T 17/18

(54) **Druckmittelbetätigte Fahrzeugbremsanlage**
Pressure actuated brake system
Installation de freinage actionnée par moyen de pression

(30) Priorität: 16.07.1999 DE 19933481
(43) Veröffentlichungstag der Anmeldung: 17.01.2001
(73) Patentinhaber: KNORR-BREMSE SYSTEME FÜR NUTZFAHRZEUGE GMBH, 80809 München (DE)
(72) Erfinder: Stumpe, Werner, 70374 Stuttgart (DE)
(74) Vertreter: Wiedemann, Markus

(56) Entgegenhaltungen:
- EP-A- 0 726 190
- EP-A- 0 738 640

## Beschreibung

### Stand der Technik

Die Erfindung geht aus von einer Fahrzeugbremsanlage nach der Gattung des Hauptanspruchs.

Aus der EP 0 726 190 ist eine derartige Fahrzeugbremsanlage bekannt und für ein Nutzfahrzeug vorgesehen. Dabei dient ein erster Bremskreis als pneumatisch betätigbarer Hinterachs-Bremskreis für die beiden Räder der Hinterachse und ein zweiter Bremskreis als pneumatisch betätigbarer Vorderachs-Bremskreis für die der Vorderachse. Bei Ausfall des einen Bremskreises soll der andere Bremskreis des Nutzfahrzeuges noch ausreichend verzögern. Die Bremszylinder des Hinterachs-Bremskreises sind jeweils als Kombibremszylinder ausgebildet, die über eine erste Steuerventileinrichtung in Abhängigkeit von einem dem Hinterachs-Bremskreis zugeordneten Steuersignal eines Mehrkreis-Bremswertgebers mit einem Druckluftspeicher für den Hinterachs-Bremskreis verbindbar ist. Die Bremszylinder des Vorderachs-Bremskreises sind über eine zweite Steuerventileinrichtung in Abhängigkeit von einem dem Vorderachs-Bremskreis zugeordneten Steuersignal des Mehrkreis-Bremswertgebers mit einem Druckluftspeicher für den Vorderachs-Bremskreis verbindbar. Die zweite Steuerventileinrichtung weist einen mit dem Druckluftspeicher für den Vorderachs-Bremskreis verbundenen ersten Druckeingang und einen mit einem Steuerausgang des Mehrkreis-Bremswertgebers bzw. Betriebsbremsventils verbundenen zweiten Druckeingang auf, durch welchen ein vom Betriebsbremsventil abgeleiteter Vorderachs-Steuerdruck eingesteuert wird. Die zweite Steuerventileinrichtung weist ferner mit den Bremszylindern der Vorderachse verbundene Druckausgänge auf.

Bedingt durch die dynamische Achslastverlagerung bei einem Bremsvorgang muß der größte Teil der Bremskraft von den Vorderrädern aufgebracht werden. Bei Nutzfahrzeugen mit hoher Vorderachslast und zumindest zeitweise niedriger Hinterachslast trifft dies in besonderem Maße zu, da wegen ihres kurzen Radstandes und ihrer großen Schwerpunkthöhe im Fall einer Bremsung eine hohe dynamische Achslastverlagerung auftritt. Bei Ausfall des Vorderachs-Bremskreises, beispielsweise durch eine Leckage im Vorderachs-Bremskreis, ist daher nicht mehr sichergestellt, daß die nun von den allein durch die Hinterräder gelieferte Bremskraft ausreicht, um die vom Gesetzgeber vorgeschriebene Verzögerung aufzubringen.

Aus diesem Grund ist bei der bekannten Fahrzeugbremsanlage eine zwischen der zweiten Steuerventileinrichtung und einem Bremszylinder des rechten Vorderrades angeordnete in Form eines Relaisventils ausgebildete Umschaltventileinrichtung vorgesehen, die bei Ausfall des Vorderachs-Bremskreises Druckmittel aus dem vom Vorderachs-Bremskreis unabhängigen Druckluftspeicher zu diesem Bremszylinder schaltet, um dort als Ersatz für den ausgefallenen Vorderachs-Bremsdruck zu dienen. Dazu wirken auf eine Steuerkammer eines als Umschaltventileinrichtung dienenden Relaisventils die Steuerdrücke für den Hinterachsbremskreis und für den Vorderachs-Bremskreis ein. Folglich erfolgt das Umschalten der Umschaltventileinrichtung in Abhängigkeit des Verhältnisses der Steuerdrücke für den Hinterachsbremskreis und für den Vorderachs-Bremskreis. Diese Steuerdrücke können jedoch auch bei intakter Bremsanlage stark variieren oder unterschiedliche Drucklaufzeiten aufweisen. Dies führt zu einem undefinierten Ansprechverhalten des als Umschaltventileinrichtung dienenden Relaisventils. Außerdem kann eine aufgrund von auch bei intaktem Vorderachsbremskreis unvermeidbaren Druckschwankungen einmal eingenommene Notbrems-Funktionsstellung dieses Relaisventils nicht mehr rückgängig gemacht werden, so daß der Bremszylinder des rechten Vorderrades auch bei intakter Bremsanlage unerwünscht Druckluft aus der als Redundanz im Fehlerfall vorgesehenen unabhängigen Druckluftquelle erhält.

Die EP 0 738 640 A2 offenbart ein elektrisch betätigtes Magnetventil als Umschalteinrichtung. Nach der Lehre dieser Entgegenhaltung ist ein Relaisventil des Vorderachsbremskreises diesem Magnetventil vorgeordnet, so daß das Magnetventil bei intakter Bremsanlage einen von dem Relaisventil ausgesteuerten Vorderachs-Bremsdruck oder bei fehlerbehaftetem Vorderachs-Bremskreis den vom Betriebsbremsventil an seinem Hinterachs-Druckausgang ausgesteuerten, ungeregelten und unmodulierten Hinterachs-Bremsdruck als Ersatz für den ausgefallenen Vorderachs-Bremsdruck durchsteuert. Da das Magnetventil deshalb ein relativ großes Bremsdruck-Volumen schaltet, muß es relativ groß bauen, was sich negativ auf die Fertigungskosten auswirkt.

Der vorliegenden Erfindung liegt demgegenüber die Aufgabe zugrunde, eine Fahrzeugbremsanlage der eingangs erwähnten Art zu schaffen, welche die vorstehend genannten Nachteile vermeidet.

Erfindungsgemäß wird diese Aufgabe durch die kennzeichnenden Merkmale von Anspruch 1 gelöst.

### Vorteile der Erfindung

Die erfindungsgemäße druckmittelbetätigte Fahrzeugbremsanlage hat den Vorteil, daß sich aufgrund der elektrischen Ansteuerung des zur Umschaltventileinrichtung gehörenden Magnetventils der Steuerdruck des Hinterachs-Bremskreises selektiv zum Relaisventil schalten läßt und sich somit ein definiertes Ansprechverhalten der Umschaltventileinrichtung ergibt. Besonders vorteilhaft ist weiterhin, daß durch das elektrisch steuerbare Magnetventil das pneumatische Steuersignal des ersten (Hinterachs-) Bremskreises als Ersatz für das ausgefallene pneumatische Steuersignal des zweiten (Vorderachs-) Bremskreises als Steuerdruck für das nachgeordnete Relaisventil herangezogen wird. In Abhängigkeit dieses Steuerdrucks wird in dem Relaisventil aus dem Vorratsdruck der unabhängigen Druckmittelquelle ein im Sinne von Drucksteigem, Druckhalten und Drucksenken gestufter und deshalb vollwertiger Ersatz Bremsdruck für den ersten (Vorderachs-) Bremszylinder moduliert. Schließlich kann das Magnetventil kleiner als beim Stand der Technik bauen, da es anstatt eines relativ großen Bremsdruck-Volumens nur ein wesentlich kleineres Steuerdruck-Volumen durchschalten muß. Weitere vorteilhafte Weiterbildungen und Ausgestaltungen der Erfindung ergeben sich durch die in den Unteransprüchen aufgeführten Maßnahmen.

### Zeichnungen

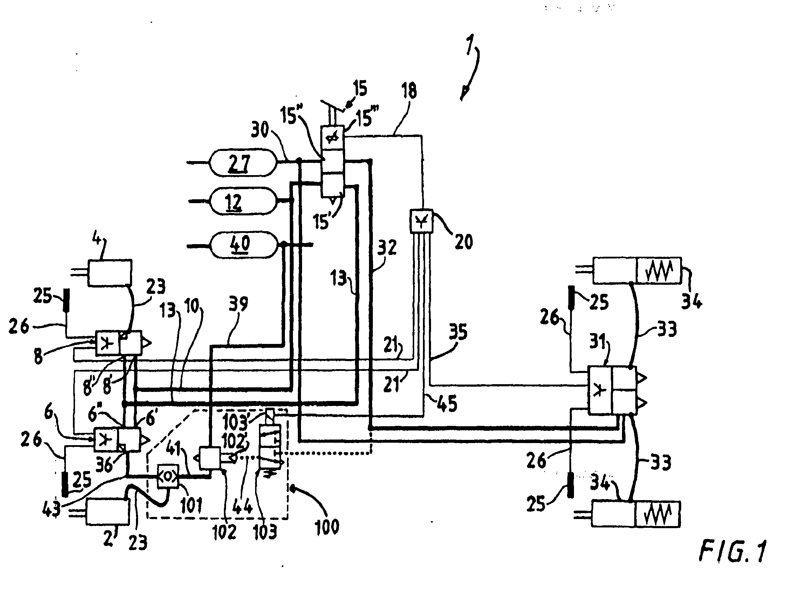

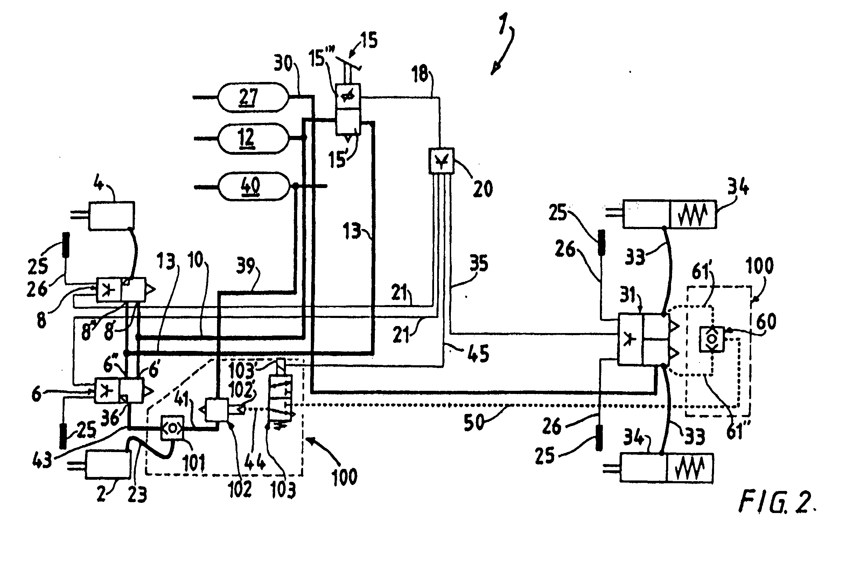

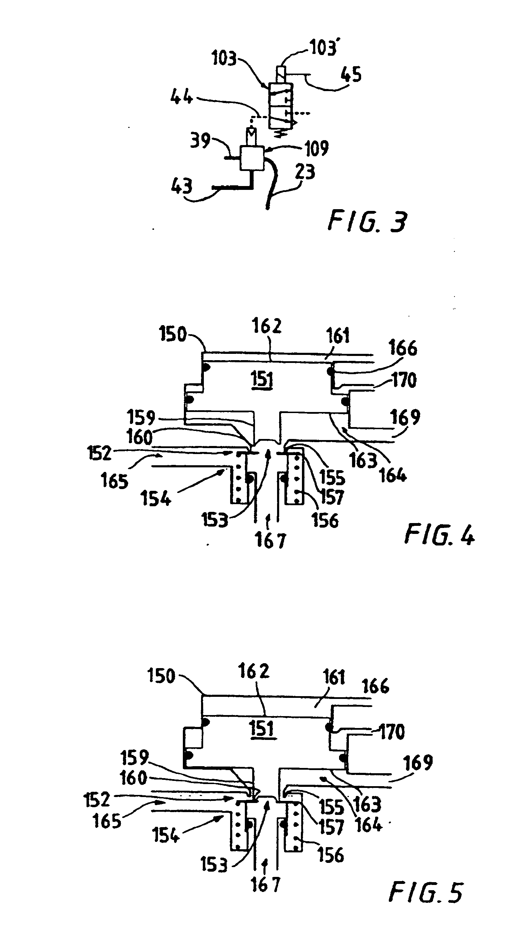

Ausführungsbeispiele der Erfindung sind in der nachfolgenden Beschreibung und in den Zeichnungen näher erläutert. Letztere zeigen in Fig. 1 einen schematischen Schaltplan einer druckmittelbetätigten Fahrzeugbremsanlage mit einer Umschaltventileinrichtung. Fig. 2 zeigt ebenfalls als schematischen Schaltplan eine erste Ausführungsform gemäß der Erfindung. Fig. 3 zeigt in einer Teilansicht eine weitere Ausführungsform der erfindungsgemäßen Umschaltventileinrichtung. Fig. 4 und 5 veranschaulichen in schematisch gehaltenen Schnittansichten ein zur erfindungsgemäßen Umschaltventileinrichtung gehörendes Relaisventil, das in Fig. 3 nur als Schaltsymbol dargestellt ist.

### Beschreibung der Ausführungsbeispiele

Die in Fig. 1 in ihrer Gesamtheit mit 1 bezeichnete druckmittelbetätigte Fahrzeugbremsanlage ist eine elektronisch geregelte Bremsanlage für Nutzfahrzeuge mit vorrangigen elektro-pneumatischen Bremskreisen und mit nachrangigen pneumatischen Rückhaltkreisen als unterlegte Sicherheitsebene.

Bei der elektronisch geregelten Bremsanlage 1 sind die Vorderachsbremsen durch einen Bremszylinder 2 des linken Vorderrades und einen Bremszylinder 4 des rechten Vorderrades repräsentiert, welche jeweils von einem Einkanal-Druckregelmodul 6, 8 angesteuert sind. Die Druckregelmodule 6, 8 der Vorderachse sind mit ihren ersten Druckeingängen 6', 8' über eine Vorratsdruckleitung 10 mit einem Druckluftspeicher 12 für die Vorderachse und mit ihren zweiten Druckeingängen 6", 8" über eine Steuerdruckleitung 13 an die Steuerseite eines Vorderachskanals 15' eines Betriebsbremsventils 15 angeschlossen.

Der Vorderachskanal 15' des Betriebsbremsventils 15 steht eingangsseitig über die Vorratsdruckleitung 10 mit dem Druckluftspeicher 12 der Vorderachse in Verbindung, um in Abhängigkeit von der Kraft, mit welcher der Fahrer das Steuerpedal betätigt, proportionale Steuerdrucksignale in die Steuerdruckleitung 13 der Vorderachse einzusteuem.

Zusätzlich wird bei Betätigung des Betriebsbremsventils 15 in einem elektrischen Teil 15''' des Betriebsbremsventils 15 ein proportionales elektrisches Steuersignal erzeugt und über eine elektrische Leitung 18 an eine zentrale elektronische Steuereinheit 20 geleitet, welche mittels je einer elektrischen Steuerleitung 21 ein Druckregelmodul 6, 8 der Vorderachse ansteuert. In Abhängigkeit von den elektrischen Steuersignalen wird in den Druckregelmodulen 6, 8 der Vorderachse in bekannter Weise ein modulierter Steuerdruck erzeugt und über pneumatische Bremsdruckleitungen 23 in die Bremszylinder 2, 4 eingesteuert. Der Druckluftspeicher 12 für die Vorderachse, der elektrische Teil 15''' des Betriebsbremsventils 15, die zentrale elektronische Steuereinheit 20, die elektrischen Steuerleitungen 21, die beiden Druckregelmodule 6, 8, die Bremsdruckleitungen 23 und die Bremszylinder 2, 4 bilden zusammen einen elektro-pneumatischen Vorderachs-Bremskreis.

Die Schaltungslogik der Druckregelmodule 6, 8 behandelt die elektrischen Steuersignale des elektro-pneumatischen Vorderachs-Bremskreises vorrangig vor den über die Steuerdruckleitung 13 eingesteuerten Steuerdrucksignalen eines pneumatischen Vorderachs-Bremskreises, welcher als Rückhalt-Bremskreis eine redundante Steuerfunktion ausübt, wenn der elektro-pneumatische Vorderachs-Bremskreis gestört ist Der elektro-pneumatische Vorderachs-Bremskreis überschneidet sich teilweise mit dem pneumatischen Vorderachs-Bremskreis, der den Druckluftspeicher 12 für die Vorderachse, den Vorderachskanal 15' des Betriebsbremsventils 15, die Steuerdruckleitung 13, die beiden Druckregelmodule 6, 8, die Bremsdruckleitungen 23 und die beiden Bremszylinder 2, 4 umfaßt.

Die beiden Druckregelmodule 6, 8 der Vorderachse ermöglichen neben der Regelung des Bremsdruckes durch integrierte ABS (Anti-Blockier-System) - Funktionen eine individuelle Anpassung des Bremsdruckes an das Drehverhalten der gebremsten Vorderräder, welches von radbezogenen Drehzahlsensoren 25 gemessen und mittels elektrischer Leitungen 26 an die Druckregelmodule 6, 8 geleitet wird.

In analoger Weise sind ein elektro-pneumatischer Hinterachs-Bremskreis und ein diesem gegenüber nachrangiger pneumatischer Hinterachs-Bremskreis aufgebaut, wobei für die Hinterachse ein eigener Druckluftspeicher 27 vorgesehen ist, welcher durch eine Vorratsdruckleitung 30 einerseits mit dem Eingang eines Hinterachskanals 15" des Betriebsbremsventils 15 und andererseits mit einem zweikanaligen Druckregelmodul 31 der Hinterachse in Verbindung steht, wobei je ein Kanal für ein Hinterrad vorgesehen ist.

Ausgangsseitig steuert das Betriebsbremsventil 15 zum einen mittels einer Steuerdruckleitung 32 Steuerdrucksignale in das Druckregelmodul 31 der Hinterachse ein, welches über pneumatische Bremsdruckleitungen 33 mit Kombibremszylindern 34 des rechten und linken Hinterrades in Verbindung steht. Zum anderen werden die vom Betriebsbremsventil 15 über die elektrische Leitung 18 an die zentrale elektronische Steuereinheit 20 ausgesteuerten elektrischen Signale mittels einer elektrischen Steuerleitung 35 in das Druckregelmodul 31 der Hinterachse eingesteuert.

In Abhängigkeit der von der zentralen elektronischen Steuereinheit 20 über die elektrischen Steuerleitungen 21, 35 herangeführten elektrischen Steuersignale bzw. bei Ausfall der elektro-pneumatischen Steuerkreise in Abhängigkeit der über die pneumatischen Steuerdruckleitungen 13, 32 herangeführten Steuerdrücke werden in den Druckregelmodulen 6, 8, 31 der Vorderachse und der Hinterachse aus den über die Vorratsdruckleitungen 10, 30 herangeführten Vorratsdrücke jeweils achsweise die Bremsdrücke erzeugt, welche jeweils an einem Druckausgang eines Druckregelmoduls 6, 8, 31 anstehen und über die pneumatischen Bremsdruckleitungen 23, 33 in die nachgeschalteten Bremszylinder 2, 4 bzw. Kombibremszylinder 34 eingesteuert werden.

Dem Druckausgang 36 des linken Druckregelmoduls 6 und dem Bremszylinder 2 des linken Vorderrades ist eine Umschaltventileinrichtung 100 zwischengeschaltet, die in einer in Fig. 1 veranschaulichten ersten Ausführungsform ein Wechselventil 101, ein Relaisventil 102 und ein als federbelastetes Magnetventil ausgebildetes 3/2-Wegeventil 103 umfaßt Dabei ist das Relaisventil 102 mit seinem Druckeingang zuströmseitig über eine Vorratsdruckleitung 39 an einen als Hilfsspeicher dienenden Druckluftspeicher 40 angeschlossen und mit seinem Druckausgang über eine pneumatische Verbindungsleitung 41 mit einem ersten Druckeingang des Wechselventils 101 verbunden. Ein zweiter Druckeingang des Wechselventils 101 ist über eine Leitung 43 mit dem Druckausgang 36 des linken Druckregelmoduls 6 verbunden, während ein Druckausgang des Wechselventils 101 an die zum linken Bremszylinder 2 führende Steuerdruckleitung 23 angeschlossen ist. Zur pneumatischen Ansteuerung der erfindungsgemäßen Umschaltventileinrichtung 100 ist das 3/2-Wegeventil 103 mit seinem ersten Druckeingang mit der Atmosphäre verbunden, während dessen zweiter Druckeingang an die Steuerdruckleitung 32 des Hinterachs-Rückhattkreises angeschlossen und sein Druckausgang über eine Leitung 44 mit einer Steuerkammer 102' des Relaisventils 102 verbunden ist. Zudem ist eine elektromagnetische Vorsteuerung 103' des 3/2-Wegeventils 103 über eine elektrische Leitung 45 mit der zentralen elektronischen Steuereinheit 20 wirkverbunden. In seiner stromlosen ersten die Ruhestellung definierenden Stellung sperrt das 3/2-Wegeventil 103 den zweiten Druckeingang mit der daran angeschlossenen Steuerdruckleitung 32 ab und verbindet gleichzeitig seinen Ausgang mit dem am ersten Druckeingang anstehenden Atmosphärendruck, so daß die mit diesem Ausgang in Verbindung stehende Steuerkammer 102' des Relaisventils 102 entlüftet ist. Demgegenüber ist in der bestromten zweiten Schaltstellung des 3/2-Wegeventils 103 dessen erster Druckeingang abgesperrt und gleichzeitig die Steuerdruckleitung 32 des Hinterachs-Rückhaltkreises auf den Ausgang und somit auf die Steuerkammer 102' des Relaisventils 102 durchgeschaltet, so daß die Steuerkammer 102' unter dem Steuerdruck p_{HA} des Hinterachs-Rückhaltkreises steht

Somit ergibt sich bei einer über das Betriebsbremsventil 15 eingeleiteten Bremsung für die Umschaltventileinrichtung 100 gemäß Fig. 1 folgende Funktionsweise: Treten im elektropneumatischen und/oder pneumatischen Vorderachs-Bremskreis keine Druckverluste auf, so bleibt das 3/2-Wegeventil in seiner ersten unbestromten Stellung, wobei der am ersten Druckeingang anstehende Atmosphärendruck auf den Ausgang und die daran angeschlossene Steuerkammer 102' des Relaisventils 102 durchgeschaltet ist Da somit die Steuerkammer 102' entlüftet ist, bleibt die vom Druckausgang des Relaisventils 102 zum ersten Druckeingang des Wechselventils 101 führende Leitung entlüftet, während an dem zweiten Druckeingang des Wechselventils 101 der von dem Druckregelmodul 6 generierte und über die Leitung 43 geführte Druck ansteht. Obwohl das Wechselventil 101 derart ausgebildet ist, daß bei etwa gleich großen Drücken der erste Druckeingang gegenüber dem zweiten um ein vorbestimmtes Maß Δp bevorrechtigt ist, ist in diesem Fall der Druckunterschied an beiden Druckeingängen so groß, daß der am zweiten Druckeingang anstehende Druck auf den Ausgang des Wechselventils 101 durchgeschaltet wird und somit zum Bremszylinder 2 gelangt.

Bei einem Druckabfall im pneumatischen oder elektropneumatischen Vorderachs-Bremskreis während einer Bremsung oder bei einer Systemstörung, die dazu führt, daß kein ausreichender Bremsdruck ausgesteuert wird, übermittelt die zentrale elektronische Steuereinheit 20 aufgrund eines im Druckregelmodul 6 aufgenommenen den Druckabfall erfassenden Drucksteuerventils oder Drucksensors ein elektrisches Ansteuersignal über die Leitung 45 an die elektromagnetische Vorsteuerung 103' des 3/2-Wegeventils 103, so daß das 3/2-Wegeventil 103 aus seiner Ruhestellung in seine bestromte zweite Stellung umschaltet. In dieser zweiten Schaltstellung schaltet das 3/2-Wegeventil 103 den am zweiten Drukkeingang anstehenden Steuerdruck p_{HA} des Hinterachs-Rückhaltkreises auf seinen Druckausgang und somit zur Steuerkammer 102' des Relaisventils 102 durch. Da das Relaisventil 102 nunmehr durch den vom Betriebsbremsventil 15 ausgesteuerten gestuften Steuerdruck p_{HA} angesteuert wird, ist auch der vom Hilfsspeicher 40 abgeleitete und über das Relaisventil 102 an seinen Druckausgang geschaltete Druck entsprechend gestuft. Dieser in Abhängigkeit von p_{HA} gestufte Druck gelangt über die Verbindungsleitung 41 an den ersten Druckeingang des Wechselventils 101, während an dessen zweiten Druckeingang kein ausreichend ausgesteuerter Druck aus dem Druckregelmodul 6 ansteht, so daß der dem ersten Druckeingang zugeführte gestufte Druck p_{HA} zum Druckausgang durchgeschaltet und in den Bremszylinder 2 des linken Vorderrades ausgesteuert wird, was schließlich zu einer Abbremsung des linken Vorderrades führt.

In Fig. 2 ist eine erste Ausführungsform einer erfindungsgemäßen Umschaltventileinrichtung 100 veranschaulicht, welche auf eine Bremsanlage 1 abstellt, die in ihrem Aufbau weitgehend der in Fig. 1 gezeigten Bremsanlage entspricht, bei der jedoch die Hinterachse ohne pneumatischen Rückhaltkreis ausgebildet ist. Dadurch weist das Betriebsbremsventil 15 zwar einen Vorderachskanal 15' und einen elektrischen Teil 15"', jedoch keinen Hinterachskanal 15" auf. Der dem Hinterachs-Bremskreis zugeordnete Druckluftspeicher 27 ist demnach über die Vorratsdruckleitung 30 mit dem zweikanaligen Druckregelmodul 31 der Hinterachse verbunden. Die erste Ausführungsform der erfindungsgemäßen Umschaltventileinrichtung 100 ist dem Druckausgang 36 des linken Druckregelmoduls 6 und dem Bremszylinder 2 des linken Vorderrades zwischengeschaltet und umfaßt ein Wechselventil 101, ein Relaisventil 102 und ein als federbelastetes Magnetventil ausgebildetes 3/2-Wegeventil 103, wobei diese Funktionselemente in gleicher Weise wie in Fig. 1 untereinander pneumatisch verbunden sind. In gleicher Weise erfolgt die elektrische Ansteuerung der ersten Ausführungsform durch die über die elektrische Leitung 45 mit der elektromagnetischen Vorsteuerung des 3/2-Wegeventils 103 elektrisch wirkverbundenen Steuereinheit 20. Im Unterschied zu Fig. 1 erfolgt bei der zweiten Ausführungsform die pneumatische Ansteuerung über das zweikanalige Druckregelmodul 31 der Hinterachse. Dazu umfaßt die erste Ausführungsform zusätzlich eine mit ihrem einen Ende an den zweiten Druckeingang des 3/2-Wegeventils 103 angeschlossene Steuerdruckleitung 50, die mit ihrem anderen Ende an einen Druckausgang eines weiteren Wechselventils 60 angeschlossen ist. Ein erster Druckeingang des Wechselventils 60 ist über eine Verbindungsleitung 61' an einen zum Bremszylinder 34 des rechten Hinterrades führenden Druckausgang des Druckregelmoduls 31 angeschlossen, während ein zweiter Druckeingang über eine Verbindungsleitung 61 " an einen zum Bremszylinder 34 des linken Hinterrades führenden Druckausgang des Druckregelmoduls 31 angeschlossen ist. Dies führt dazu, daß der jeweils größere Druck von den beiden Druckausgängen des zweikanaligen Druckregelmoduls 31 an den Druckausgang des Wechselventils 60 durchgeschaltet und am entsprechenden Druckeingang des Magnetventil 103 verfügbar wird.

Für die erste Ausführungsform ergibt sich somit folgende Funktionsweise: Treten in Vorderachs-Bremskreis keine Druckverluste auf, so bleibt das 3/2-Wegeventil 103 in seiner ersten unbestromten Stellung, wobei der am ersten Druckeingang anstehende Atmosphärendruck auf den Ausgang und die daran angeschlossene Steuerkammer 102' des Relaisventils 102 durchgeschaltet ist Da somit die Steuerkammer 102' entlüftet ist, bleibt die vom Druckausgang des Relaisventils 102 zum ersten Druckeingang des Wechselventils 101 führende Leitung 41 entlüftet, während an dem zweiten Druckeingang des Wechselventils 101 der von dem Druckregelmodul 6 generierte und über die Leitung 43 geführte Druck ansteht. In diesem Fall ist der Druckunterschied an beiden Druckeingängen so groß, daß der am zweiten Druckeingang anstehende Druck auf den Ausgang des Wechselventils 101 durchgeschaltet wird und somit zum Bremszylinder 2 gelangt. Die Funktionsweise ist somit für den Fall der intakten Bremsung bei der Ausführungsform identisch zu Fig. 1.

Bei einem Druckabfall im pneumatischen oder elektropneumatischen Vorderachs-Bremskreis während einer Bremsung, übermittelt die zentrale elektronische Steuereinheit 20 aufgrund eines im Druckregelmodul 6 aufgenommenen den Druckabfall erfassenden Drucksteuerventils oder Drucksensors ein elektrisches Ansteuersignal über die Leitung 45 an die elektromagnetische Vorsteuerung des 3/2-Wegeventils 103, so daß das 3/2-Wegeventil 103 aus seiner Ruhestellung in seine zweite bestromte Schaltstellung umschaltet. In dieser zweiten Schaltstellung schaltet das 3/2-Wegeventil 103 den an seinem zweiten Druckeingang anstehenden Steuerdruck auf seinen Druckausgang durch. Im Unterschied zu Fig. 1 handelt es sich bei diesem Steuerdruck um den von dem zweikanaligen Druckregelmodul 31 der Hinterachse ausgeregelten Bremsdruck, wobei der jeweils größere Druck aus den beiden Kanälen dieses Druckregelmoduls 31 mittels des zusätzlichen Wechselventils 60 selektiert wird. Dieser auf den Druckausgang des 3/2-Wegeventils 103 geschaltete Steuerdruck beaufschlagt die Steuerkammer 102' des Relaisventils 102 und dient somit der pneumatischen Ansteuerung des Relaisventils 102. Dadurch wird der am Druckeingang des Relaisventils 102 anstehende aus dem Hilfsspeicher 40 zugeführte Vorratsdruck als Funktion des von dem zweikanaligen Druckregelmodul 31 ausgesteuerten Steuerdrucks auf den Druckausgang des Relaisventils 102 geschaltet. Von dort gelangt dieser Druck über die Verbindungsleitung 41 an den ersten Drukkeingang des Wechselventils 101, während an dessen zweiten Druckeingang aufgrund des Druckverlusts kein ausreichend ausgesteuerter Druck aus dem Druckregelmodul 6 ansteht, so daß der dem ersten Druckeingang zugeführte Steuerdruck zum Druckausgang durchgeschaltet und in den Bremszylinder 2 des linken Vorderrades ausgesteuert wird.

Fig. 3 zeigt eine abgewandelte Ausführungsform der erfindungsgemäßen Umschaltventileinrichtung 100, bei welcher die gemäß der ersten Ausführungsform mittels des Wechselventils 101 und Relaisventils 102 erzielten einzelnen Ventilfunktionen in einem kombiniert ausgebildeten Relaisventil 109 zusammengefaßt sind. Dabei ist das der elektrischen und pneumatischen Ansteuerung dienende 3/2-Wegeventil 103 in identischer Weise wie bei der ersten und zweiten Ausführungsform ausgebildet. Zur elektrischen Ansteuerung ist die elektromagnetische Vorsteuerung 103' des 3/2-Wegeventils 103 über die elektrische Leitung 45 mit der Steuereinheit 20 wirkverbunden, während zur pneumatischen Ansteuerung der zweite Druckeingang an die Steuerdruckleitung 32 bzw. 50 angeschlossen ist, je nachdem, ob die Ausführungsform nach Maßgabe eines pneumatischen Hinterachs-Rückhaltkreises oder eines von dem Druckregelmodul 31 der Hinterachse ausgeregelten Bremsdrucks ausgesteuert wird. Desweiteren ist der erste Druckeingang des 3/2-Wegeventils 103 an die Umgebungsatmosphäre angeschlossen und der Druckausgang über die Verbindungsleitung 44 mit der eine erste Wirkfläche bildenden Steuerkammer des kombiniert ausgebildeten Relaisventils 109 pneumatisch verbunden. Im Unterschied zu der ersten Ausführungsform, bei denen das jeweilige Relaisventil 102 mit seiner zweiten Wirkfläche an die Atmosphäre angeschlossen ist, ist bei der in Fig. 3 dargestellten weiteren Ausführungsform eine der ersten Wirkfläche entgegengerichtete zweite Wirkfläche über die Druckleitung 43 mit dem Druckausgang 36 des Druckregelmoduls 6 verbunden und bildet somit einen Druckeingang. Schließlich steht ein anderer Druckeingang des kombiniert ausgebildeten Relaisventils 109 zuströmseitig über die Vorratsdruckleitung 39 mit dem Hilfsspeicher 40 in Verbindung, während der Druckausgang an die zum linken Bremszylinder 2 führende Bremsdruckleitung 23 angeschlossen ist.

Bei intaktem Vorderachs-Bremskreis bleibt das 3/2-Wegeventil gemäß der zweiten Ausführungsform der erfindungsgemäßen Umschaltventileinrichtung 100 in seiner unbestromten Ruhestellung, so daß der an seinem ersten Druckeingang anstehende Atmosphärendruck auf den Druckausgang und somit zur Steuerkammer des kombiniert ausgebildeten Relaisventils 109 gelangt. Während die Steuerkammer als erste Wirkfläche somit entlüftet ist, wird die zweite Wirkfläche des Relaisventils 109 aufgrund des von dem Druckausgang 36 des Druckregelmoduls 6 über die Leitung 43 zugeführten Steuerdrucks beaufschlagt, so daß das Relaisventil 109 wegen der zugunsten der zweiten Wirkfläche wirkenden Druckdifferenz den mit dem Hilfsspeicher 40 verbundenen Druckeingang absperrt und gleichzeitig den durch den von dem Druckregelmodul 6 ausgeregelten Steuerdruck beaufschlagten Druckeingang zu seinem Druckausgang durchschaltet. Über die an den Druckausgang des Relaisventils 109 angeschlossene Bremsdruckleitung 23 gelangt dieser Druck zum Bremszylinder 2.

Bei einem Druckabfall im Vorderachs-Bremskreis während einer Bremsung schaltet das 3/2-Wegeventil 103 aufgrund eines von der Steuereinheit 20 übermittelten elektrischen Ansteuersignals aus seiner Ruhestellung in die bestromte zweite Schaltstellung. Der an seinem zweiten Druckeingang anstehende Steuerdruck wird dadurch auf den Druckausgang durchgeschaltet und somit der Steuerkammer des kombiniert ausgebildeten Relaisventils 109 zugeführt. Während die erste Wirkfläche somit diesem Steuerdruck ausgesetzt ist, steht an der zweiten Wirkfläche aufgrund des Druckverlusts kein ausreichend ausgesteuerter Druck aus dem Druckmodul 6 an, so daß das Relaisventil 109 wegen der zugunsten der ersten Wirkfläche wirkenden Druckdifferenz den der zweiten Wirkfläche zugeordneten Druckeingang absperrt und gleichzeitig den der ersten Wirkfläche zugeordneten und mit dem Hilfsspeicher 40 in Verbindung stehenden Druckeingang zu seinem Druckausgang durchschaltet. Über die daran angeschlossene Bremsdruckleitung 23 gelangt dieser von dem Hilfsspeicher 40 zugeführte Druck als Funktion des von dem 3/2 - Wegeventils 103 zugeführten Steuerdrucks der Hinterachse zum Bremszylinder 2 des linken Vorderrades. Wenn man dieser zweiten Ausführungsform der erfindungsgemäßen Umschaltventileinrichtung 100 die Konfiguration nach Fig. 2 zugrundeliegt, handelt es sich bei diesem Hinterachs-Steuerdruck um den von dem zweikanaligen Druckregelmodul 31 der Hinterachse ausgeregelten Bremsdruck.

Fig. 4 veranschaulicht eine stark schematisierte Ausgestaltung des in Fig. 3 gezeigten kombiniert ausgebildeten Relaisventils 109. Das Relaisventil 109 weist ein Ventilgehäuse 150 auf, innerhalb dessen ein Relaiskolben 151 längsbeweglich angeordnet ist, um ein aus einem Einlaßventil 152 und einem Auslaßventil 153 bestehendes Doppelsitzventil 154 zu betätigen. Das Einlaßventil 152 beinhaltet einen am Ventilgehäuse 150 angeordneten äußeren Ventilsitz 155, gegen welchen mittels einer Ventilfeder 156 ein Ventilkörper 157 vorgespannt ist. Der Relaiskolben 151 hat einen endseitigen Kolbenzapfen 159, dessen Rand als ringförmiger, innerer Ventilsitz 160 ausgebildet ist, welcher zusammen mit dem Ventilkörper 157 das Auslaßventil 153 des Doppelsitzventils 154 bildet. Eine erste Steuerkammer 161 des Relaisventils 109 ist durch eine obere Wirkfläche 162 des Relaiskolbens 151 und durch das Ventilgehäuse 150 begrenzt. Von der unteren Wirkfläche 163 des Relaiskolbens 151 und einem Zwischenboden des Ventilgehäuses 150 wird eine als Arbeitskammer dienende zweite Steuerkammer 164 begrenzt. Ein Einlaß 165 des Relaisventils 109 umschließt das Doppelsitzventil 154. Dichtungen 166 zwischen dem Relaiskolben 151 und dem Ventilgehäuse 150 dichten die Steuerkammern 161, 164 gegeneinander ab.

Dabei entspricht der Einlaß 165 dem Druckeingang des in Fig. 3 dargestellten Relaisventils 109, an den die Vorratsdruckleitung 39 angeschlossen ist. Ferner ist die erste Steuerkammer 161 über die Leitung 44 mit dem Druckausgang des 3/2-Wegeventils 103 verbunden, während die zweite Steuerkammer 164 über einen Ausgang 169 an die zum Bremszylinder 2 führende Bremsdruckleitung 23 angeschlossen ist Zwischen der ersten und zweiten Steuerkammer 161, 164 ist ein Zwischenentlüftungsauslaß 170 zur Atmosphäre hin vorgesehen. Ein bodenseitiger Auslaß 167 ist an die zum Druckausgang 36 des Druckregelmoduls 6 führende Leitung 43 angeschlossen.

Bei intaktem Vorderachs-Bremskreis wirkt gemäß Fig. 4 in der ersten Steuerkammer 161 des Relaisventils 109 der Atmosphärendruck und in der zweiten Steuerkammer der von dem Druckregelmodul 6 ausgeregelte Druck. Dadurch erfährt der Relaiskolben 151 eine resultierende Kraft nach oben, wodurch dieser nach oben gedrängt und der innere Ventilsitz 160 vom Ventilkörper 157 abgehoben ist. In dieser Brems-Grundstellung des Relaiskolbens 151 ist der Auslaß 167 geöffnet und das Einlaßventil 152 gesperrt, so daß der am Auslaß 167 anstehende von dem Druckregelmodul 6 zugeleitete Druck zum Ausgang 169 und damit zum Bremszylinder 2 abströmt.

Bei einem Druckabfall im pneumatischen Vorderachs-Bremskreis wirkt gemäß Fig. 5 in der ersten Steuerkammer 161 der von dem Druckausgang des 3/2-Wegeventils 103 ausgesteuerte Steuerdruck der Hinterachse, während in die zweite Steuerkammer aufgrund des Druckverlusts im Vorderachs-Bremskreis kein ausreichender Druck von dem Druckregelmodul 6 ausgesteuert wird. Dadurch erfährt der Relaiskolben 151 eine resultierende Kraft nach unten, wodurch der Kolbenzapfen 159 den inneren Ventilsitz 160 auf den Ventilkörper 157 drückt und den Auslaß 167 schließt. Gleichzeitig wird der Ventilkörper 157 vom äußeren Ventilsitz 155 abgehoben und hierdurch das Einlaßventil 152 geöffnet. In dieser in Fig. 5 veranschaulichten Stellung des Relaisventils 109 ist der am Einlaßventil 152 anstehende stationäre Vorratsdruck vom Hilfsspeicher 40 zum Ausgang 169 als Funktion des von dem 3/2-Wegeventil 103 zugeführten Steuerdrucks der Hinterachse zum Bremszylinder 2 des linken Vorderrades geschaltet.

Im Unterschied zu den vorstehend erläuterten Ausführungsformen kann eine - nicht dargestellte - abgewandelte Ausführungsform der erfindungsgemäßen Umschaltventileinrichtung 100 durch eine vertauschte Anschlußbelegung der beiden Druckeingänge des 3/2-Magnetventils 103 realisiert sein. Dazu liegt der erste Druckeingang des Magnetventils 103 nicht an Atmosphärendruck, sondern an dem über die Leitung 32 bzw. 50 zugeführten Hinterachs-Steuerdruck, während der zweite Druckeingang des Magnetventils 103 mit Atmosphärendruck verbunden ist. Zur elektrischen Ansteuerung ist es somit erforderlich, daß das Magnetventil 103 während einer ungestörten Bremsung bestromt und bei Auftreten einer Störung stromlos geschaltet ist.

Allen vorstehend erläuterten Ausführungsformen der erfindungsgemäßen Umschaltventileinrichtung 100 ist gemeinsam, daß die elektrische Ansteuerung auf der Auswertung von in den Druckregelmodulen 6, 8, 31 implementierten Drucksensoren beruht, wobei die Drucksensor-Signale als Ist-Druck über ein entsprechendes Bussystem der zentralen elektronischen Steuereinheit 20 übermittelbar sind, so daß auch auf Störungen im Druckleitungssystem und den dazu gehörenden Ventilen mit scharf definiertem Ansprechverhalten der Umschaltventileinrichtung 100 reagiert werden kann.

## Patentansprüche

1. Druckmittelbetätigte Fahrzeugbremsanlage mit wenigstens einem ersten Bremskreis und einem zweiten Bremskreis mit folgenden Merkmalen:
a) Dem ersten Bremskreis ist wenigstens ein Bremszylinder (34) zugeordnet, der über eine erste Steuerventileinrichtung (31) in Abhängigkeit von einem dem ersten Bremskreis zugeordneten Steuersignal eines Mehrkreis-Bremswertgebers (15) mit einer Druckmittelquelle (27) für den ersten Bremskreis verbindbar ist,
b) dem zweiten Bremskreis sind ein erster Bremszylinder (2) und ein zweiter Bremszylinder (4) zugeordnet, die über eine zweite Steuerventileinrichtung (6, 8) in Abhängigkeit von einem dem zweiten Bremskreis zugeordneten Steuersignal des Mehrkreis-Bremswertgebers (15) mit einer zweiten Druckmittelquelle (12) für den zweiten Bremskreis verbindbar sind,
c) die zweite Steuerventileinrichtung (6, 8) weist einen mit der Druckmittelquelle (12) für den zweiten Bremskreis verbundenen Druckmitteleingang (6', 8') und einen mit dem ersten Bremszylinder (2) verbundenen Druckmittelausgang (36) auf,
d) dem Druckmittelausgang (36) der zweiten Steuerventileinrichtung (6, 8) und dem ersten Bremszylinder (2) des zweiten Bremskreises ist eine elektrisch steuerbare Umschaltventileinrichtung (100) zwischengeordnet, welche derart betätigbar ist, dass der erste Bremszylinder (2) mit einer von der Druckmittelquelle (12) des zweiten Bremskreises unabhängigen Druckmittelquelle (40) verbindbar ist, wobei
e) die Umschaltventileinrichtung (100) umfasst zumindest ein Relaisventil (102) und ein elektrisch steuerbares Magnetventil (103) mit wenigstens zwei Schaltzuständen wobei in einem von einem elektrischen Steuersignal abhängigen Schaltzustand das dem ersten Bremskreis zugeordnete, druckeingangsseitig des Magnetventils (103) anstehende pneumatische Steuersignal einem Betätigungsmittel (102') des Relaisventils (102) zuschaltbar ist und in Abhängigkeit von dem zuschaltbaren, dem ersten Bremskreis zugeordneten Steuersignal ein druckeingangsseitig am Relaisventil (102) anstehender Vorratsdruck der unabhängigen Druckmittelquelle (40) druckausgangsseitig als Funktion des dem ersten Bremskreis zugeordneten Steuersignals aussteuerbar und dem ersten Bremszylinder (2) zuschaltbar ist, **dadurch gekennzeichnet, dass**
f) die Umschaltventileinrichtung (100) ein vorgeschaltetes Wechselventil (60) umfasst, dessen Druckausgang über eine pneumatische Verbindungsleitung (50) mit einem Druckeingang des Magnetventils (103) in Verbindung steht, wobei ein erster Druckeingang an einen zu einem Bremszylinder (34) führenden Druckmittelausgang der ersten Steuerventileinrichtung (31) angeschlossen ist, während ein zweiter Druckeingang an einen zu einem komplementären Bremszylinder (34) führenden Druckmittelausgang der ersten Steuerventileinrichtung (31) angeschlossen ist.

2. Druckmittelbetätigte Fahrzeugbremsanlage nach Anspruch 1, **dadurch gekennzeichnet, dass** die Umschaltventileinrichtung (100) ein mit seinem ersten Druckeingang an einen Druckausgang des Relaisventils (102) angeschlossenes weiteres Wechselventil (101) aufweist, dessen zweiter Druckeingang mit dem Druckmittelausgang (36) der zweiten Steuerventileinrichtung (6, 8) und dessen Druckausgang mit dem ersten Bremszylinder (2) des zweiten Bremskreises in Verbindung steht.

3. Druckmittelbetätigte Fahrzeugbremsanlage nach einem der Ansprüche 1 oder 2, **dadurch gekennzeichnet, dass** ein Druckeingang des Magnetventils (103) an den Atmosphärendruck angeschlossen ist, ein anderer Druckeingang zur Aufnahme des dem ersten Bremskreis zugeordneten Steuersignals vorgesehen ist und ein Druckausgang mit dem Betätigungsmittel (102') des Relaisventils (102) verbunden ist.

4. Druckmittelbetätigte Fahrzeugbremsanlage nach Anspruch 3, **dadurch gekennzeichnet, dass** das Magnetventil (103) in seiner ersten stromlosen Ruhestellung den an Atmosphärendruck angeschlossenen Druckeingang mit seinem Druckausgang verbindet und in seiner bestromten zweiten Stellung den zur Aufnahme des pneumatischen Steuersignals an eine Steuerdruckleitung (32, 50) angeschlossenen Druckeingang mit seinem Druckausgang verbindet.

5. Druckmittelbetätigte Fahrzeugbremsanlage nach einem der Ansprüche 1 bis 4, **dadurch gekennzeichnet, dass** das Betätigungsmittel (102') des Relaisventils (102) als pneumatische Steuerkammer ausgebildet ist.

6. Druckmittelbetätigte Fahrzeugbremsanlage nach einem der Ansprüche 1 bis 5, **dadurch gekennzeichnet, dass** das Magnetventil (103) der Umschaltventileinrichtung (100) als ein federbelastetes 3/2-Wegeventil ausgebildet ist.

7. Druckmittelbetätigte Fahrzeugbremsanlage nach einem der Ansprüche 2 bis 6, **dadurch gekennzeichnet, dass** die von der Umschaltventileinrichtung (100) umfassten Wechselventile (101, 60) derart ausgebildet sind, dass die jeweils ersten Druckeingänge pneumatisch bevorrechtigt sind.

8. Druckmittelbetätigte Fahrzeugbremsanlage nach einem der Ansprüche 2 bis 7, **dadurch gekennzeichnet, dass** das Relaisventil (102) und das weitere Wechselventil (101) der Umschaltventileinrichtung (100) als kombiniertes Relaisventil (109) ausgebildet sind, wobei eine als Betätigungsmittel dienende Steuerkammer (161) an die zum Druckeingang des Magnetventils (103) führende Verbindungsleitung (44) angeschlossen ist, wobei ein erster Druckeingang (165) mit der zur unabhängigen Druckmittelquelle (40) führenden Vorratsdruckleitung (39), ein zweiter Druckeingang (167) mit dem Druckmittelausgang (36) der zweiten Steuerventileinrichtung (6) und der Druckausgang (169) mit der zum Bremszylinder (2) führenden Leitung (23) verbunden ist.

9. Druckmittelbetätigte Fahrzeugbremsanlage nach einem der Ansprüche 1 bis 8, **dadurch gekennzeichnet, dass** ein elektrischer Steueranschluss (103') des Magnetventils (103) über eine elektrische Leitung (45) mit einer zentralen elektronischen Steuereinheit (20) elektrisch wirkverbunden ist.

## Claims

1. Brake system operated with a pressurised medium, comprising at least one first brake circuit and one second brake circuit and presenting the following features:
(1) at least one brake cylinder (34) is associated with said first brake circuit, which is adapted to be connected via a first control valve means (31) to a source of pressurised medium (27) for said first brake circuit in response to a control signal of a multi-circuit brake force generator (15), which control signal is associated with said first brake circuit;
(b) a first brake cylinder (2) and a second brake cylinder (4) are associated with said second brake circuit, which are adapted to be connected via a second control valve means (6, 8) to a second source of pressurised medium (12) for said second brake circuit in response to a control signal of said multi-circuit brake force generator (15), which control signal is associated with said second brake circuit;
(c) said second control valve means (6, 8) comprises a pressurised-medium inlet port (6', 8') connected to said source of pressurised medium (12) for said second brake circuit and a pressurised-medium outlet port (36) connected to said first brake cylinder (2);
(d) an electrically controllable change-over valve means (100) is interposed between said pressurised-medium outlet port (36) of said second control valve means (6, 8) and said first brake cylinder (2) of said second brake circuit, which valve means is operable in such a manner that said first brake cylinder (2) may be connected to a source of pressurised medium (40) independent of said source of pressurised medium (12) of said second brake circuit;
(e) wherein said change-over valve means (100) comprises at least one relay valve (102) and an electrically controllable solenoid-operated valve (103) with at least two switching states, with a pneumatic control signal applied at the pressure input side of said solenoid-operated valve (103) and associated with said first brake circuit in a switching state dependent on an electrical control signal being adapted to be connected to an operating means (102') of said relay valve (102) and, in dependence on said control signal associated with said first brake circuit and adapted to be connected, with a reservoir pressure of said independent source of pressurised medium (40) applied at the pressure input side at said relay valve (102), being adjustable as a function of the control signal associated with said first brake circuit, and being adapted to be connected to said first brake cylinder (2), **characterised in that**
(f) said change-over valve means (100) comprises an upstream shuttle valve (60) whose pressure outlet port communicates with a pressure inlet port of said solenoid-operated valve (103) via a pneumatic connecting line (50), wherein a first pressure inlet port is connected to a pressurised-medium outlet port of said first control valve means (31), which extends to one brake cylinder (34), whilst a second pressure inlet port is connected to a pressurised-medium outlet port of said first control valve means (31), which extends to a complementary brake cylinder (34).

2. Brake system operated with a pressurised medium according to Claim 1, **characterised in that** said change-over valve means (100) comprises a further shuttle valve (101) connected by its first pressure inlet port to a pressure outlet port of said relay valve (102), whose second pressure inlet port communicates with a pressurised-medium outlet port (36) of said second control valve means (6, 8) and whose pressure outlet port communicates with said first brake cylinder (2) of said second brake circuit.

3. Brake system operated with a pressurised medium according to any of the Claims 1 or 2, **characterised in that** a pressure inlet port of said solenoid-operated valve (103) is connected to atmospheric pressure, that a further pressure inlet port is provided for receiving said control signal associated with said first brake circuit, and that one pressure outlet port is connected to said operating means (102') of said relay valve.

4. Brake system operated with a pressurised medium according to Claim 3, **characterised in that** said solenoid-operated valve (103), in its first de-energised rest position, connects the pressure inlet port connected to atmospheric pressure to its pressure outlet port and, in a second energised position, connects the pressure inlet port connected to a control pressure line (32, 50) for receiving said pneumatic control signal, to its pressure outlet port.

5. Brake system operated with a pressurised medium according to any of the Claims 1 to 4, **characterised in that** said operating means (102') of said relay valve (102) is configured as pneumatic control chamber.

6. Brake system operated with a pressurised medium according to any of the Claims 1 to 5, **characterised in that** said solenoid-operated valve (103) of said change-over valve means (100) is configured as spring-loaded 3/2-way valve.

7. Brake system operated with a pressurised medium according to any of the Claims 2 to 6, **characterised in that** said shuttle valves (101, 60) comprised by said change-over valve means (100) are configured in such a way that the respective first pressure inlet ports are pneumatically privileged.

8. Brake system operated with a pressurised medium according to any of the Claims 2 to 7, **characterised in that** said relay valve (102) and said further shuttle valve (101) of said change-over valve means (100) are configured as combined relay valve (109), with a control chamber (161) serving as operating means being connected to said connecting line (44) extending to the pressure inlet port of said solenoid-operated valve (103), with a first pressure inlet port (165) being connected to said reservoir pressure line (39) extending towards said independent source of pressurised medium (40), with a second pressure inlet port (167) being connected to said pressurised-medium outlet port (36) of said second control valve means (6) and with said pressure outlet port (169) being connected to the line extending to said brake cylinder (2).

9. Brake system operated with a pressurised medium according to any of the Claims 1 to 8, **characterised in that** an electric control port (103') of said solenoid-operated valve (103) is electrically operatively connected via an electric line (45) to a central electronic controller (20).

## Revendications

1. Système de freinage actionné par un milieu sous pression, comprenant au moins un premier circuit de freinage et un deuxième circuit de freinage, en présentant les caractéristiques suivantes:
(1) au moins un cylindre de freinage (34) est affecté audit premier circuit de freinage, qui est apte à être relié, via un premier moyen à vanne-pilote (31), à une source de milieu sous pression (27) pour ledit premier circuit de freinage, en réponse à un signal de commande d'un générateur de l'effort de freinage à plusieurs circuits (15), lequel signal de commande est affecté audit premier circuit de freinage;
(b) un premier cylindre de freinage (2) et un deuxième cylindre de freinage (4) sont affectés audit deuxième circuit de freinage, qui sont apte à être relié, via un deuxième moyen à vanne-pilote (6, 8), à une deuxième source de milieu sous pression (12) pour ledit deuxième circuit de freinage en réponse à un signal de commande dudit générateur de l'effort de freinage à plusieurs circuits (15), lequel signal de commande est affecté audit deuxième circuit de freinage;
(c) ledit deuxième moyen à vanne-pilote (6, 8) comprend une orifice d'admission du milieu sous pression (6', 8'), qui est reliée à ladite source de milieu sous pression (12) pour ledit deuxième circuit de freinage, et une orifice de sortie du milieu sous pression (36), qui est reliée audit premier cylindre de freinage (2);
(d) un moyen à soupape d'inversion (100) à commande électrique est interposé entre ladite orifice de sortie du milieu sous pression (36) dudit deuxième moyen à vanne-pilote (6, 8) et ledit premier cylindre de freinage (2) dudit deuxième circuit de freinage, lequel moyen à soupape est commandable d'une telle manière, que ledit cylindre de freinage (2) se puisse relier à une source de milieu sous pression (40) indépendante de ladite source de milieu sous pression (12) dudit deuxième circuit de freinage;
(e) dans lequel ledit moyen à soupape d'inversion (100) comprend au moins une soupape à relais (102) et une électrovanne (103) à commande électrique, à au moins deux états d'inversion, à un signal de commande pneumatique, qui est appliqué du côté d'admission de pression de ladite électrovanne (103) et affecté audit premier circuit de freinage en un état d'inversion, dépendant d'un signal de commande électrique, étant apte à être relié à un moyen actionneur (102') de ladite soupape à relais (102) et, en fonction dudit signal de commande affecté audit premier circuit de freinage et apte à être relié, étant ajustable en fonction du signal de commande affecté audit premier circuit de freinage, quand une pression de réservoir de ladite source indépendante de milieu sous pression (40) est appliquée au côté d'admission de pression à ladite soupape à relais (102), et étant apte à être relié audit premier cylindre de freinage (2), **caractérisé en ce que**
(f) ledit moyen à soupape d'inversion (100) comprend une soupape à deux voies (60) en amont, dont l'orifice de sortie de pression se trouve en communication avec une orifice d'admission de pression de ladite électrovanne (103) via un conduit de connexion pneumatique (50), dans lequel une première orifice d'admission de pression est reliée à une orifice de sortie du milieu sous pression dudit premier moyen à vanne-pilote (31), qui s'étend vers un cylindre de freinage (34), pendant qu'une deuxième orifice d'admission de pression est reliée à une orifice de sortie du milieu sous pression dudit premier moyen à vanne-pilote (31), qui s'étend vers un cylindre de freinage (34) complémentaire.

2. Système de freinage actionné par un milieu sous pression selon la revendication 1, **caractérisé en ce que** ledit moyen à soupape d'inversion (100) comprend une soupape à deux voies (101) additionnelle reliée, par sa première orifice d'admission de pression, à une orifice de sortie de pression de ladite soupape à relais (102), dont la deuxième orifice d'admission de pression se trouve en communication avec une orifice de sortie du milieu sous pression (36) dudit deuxième moyen à vanne-pilote (6, 8) et dont l'orifice de sortie de pression se trouve en communication avec ledit premier cylindre de freinage (2) dudit deuxième circuit de freinage.

3. Système de freinage actionné par un milieu sous pression selon une quelconque des revendications 1 ou 2, **caractérisé en ce qu'**une orifice d'admission de pression de ladite électrovanne (103) est reliée à la pression atmosphérique, qu'une autre orifice d'admission de pression est formée à recevoir ledit signal de commande affecté audit premier circuit de freinage, et **en ce qu'**une orifice de sortie de pression est reliée audit moyen actionneur (102') de ladite soupape à relais.

4. Système de freinage actionné par un milieu sous pression selon la revendication 3, **caractérisé en ce que** ladite électrovanne (103), en sa première position de repos hors tension, raccorde l'orifice d'admission de pression à la pression atmosphérique par son orifice de sortie de pression, et, en une deuxième position en conduction, raccorde l'orifice d'admission de pression reliée au conduit de pression de commande (32, 50) à recevoir ledit signal de commande pneumatique, par son orifice de sortie de pression.

5. Système de freinage actionné par un milieu sous pression selon une quelconque des revendications 1 à 4, **caractérisé en ce que** ledit moyen actionneur (102') de ladite soupape à relais (102) est configuré sous forme d'une chambre de commande pneumatique.

6. Système de freinage actionné par un milieu sous pression selon une quelconque des revendications 1 à 5, **caractérisé en ce que** ladite électrovanne (103) dudit moyen à soupape d'inversion (100) est configurée sous forme d'une soupape à 3/2 voies soumises à l'action d'un ressort.

7. Système de freinage actionné par un milieu sous pression selon une quelconque des revendications 2 à 6, **caractérisé en ce que** lesdites soupapes à deux voies (101, 60) comprises dans ledit moyen à soupape d'inversion (100) sont configurées d'une telle manière, que les premières orifices d'admission de pression respectives soient privilégiées de façon pneumatique.

8. Système de freinage actionné par un milieu sous pression selon une quelconque des revendications 2 à 7, **caractérisé en ce que** ladite soupape à relais (102) et ladite soupape à deux voies (101) supplémentaire dudit moyen à soupape d'inversion (100) sont configurées sous forme d'une soupape à relais combinée (109), à une chambre de commande (161), servant en tant que moyen actionneur, étant reliée audit conduit de connexion (44) qui s'étend à l'orifice d'admission de pression de ladite électrovanne (103), à une première orifice d'admission de pression (165) étant reliée audit conduit de pression de réservoir (39), qui s'étend vers ladite source de milieu sous pression (40) indépendante, à une deuxième orifice d'admission de pression (167) étant reliée à ladite orifice de sortie du milieu sous pression (36) dudit deuxième moyen à vanne-pilote (6) et à ladite orifice de sortie de pression (169) étant reliée au conduit, qui s'étend vers ledit cylindre de freinage (2).

9. Système de freinage actionné par un milieu sous pression selon une quelconque des revendications 1 à 8, **caractérisé en ce qu'**une orifice de commande électrique (103') de ladite électrovanne (103) est reliée, de manière active électrique, via une ligne électrique (45), à une unité de commande électronique centrale (20).
